# EUROPÄISCHE PATENTSCHRIFT

(11) **EP 1 582 386 B1**
(45) Veröffentlichungstag und Bekanntmachung des Hinweises auf die Patenterteilung: **19.12.2012**
(21) Anmeldenummer: 05007288.3
(22) Anmeldetag: 04.04.2005
(51) Int. Cl.: B60J 1/20

(54) **Fensterrollo für Kraftfahrzeuge**
Roller blind for motor vehicles
Store à enroleur pour véhicules

(30) Priorität: 02.04.2004 DE 102004017023
(43) Veröffentlichungstag der Anmeldung: 05.10.2005
(73) Patentinhaber: BOS GmbH & Co. KG, 73760 Ostfildern (DE)
(72) Erfinder:
(74) Vertreter: Rüger, Barthelt & Abel

(56) Entgegenhaltungen:
- EP-A- 1 211 109
- WO-A-02/42103
- WO-A-2005/012016

## Beschreibung

Die Erfindung betrifft ein Fensterrollo für Kraftfahrzeuge gemäß dem Oberbegriff des Anspruchs 1.

Aus der EP 1 211 109 A1 ist ein Fensterrollo für Kraftfahrzeuge bekannt geworden, das zum Schutz des Fahrzeuginnenraumes vor Sonneneinstrahlung vorgesehen ist. Große Fensterflächen bei modernen Karosserieformen führen bei starker Sonneneinstrahlung zu einer erheblichen Aufheizung des Fahrzeuginneren. Bei Fahrzeugen mit Klimaanlage bedeutet die Aufheizung einen erheblichen Energieverbrauch, um der Erwärmung entgegenzuwirken. Hierzu wird ein Fensterrollo mit einer Rollobahn vorgeschlagen, die endseitig durch einen Zugstab in zwei einander gegenüberliegende Führungsschienen neben einem Heckfenster geführt ist. Der Zugstab ist längenverstellbar, um der unterschiedlichen Fensterbreite zu folgen. Das Auf- und Abwickeln der Rollobahn von einer Aufwickelwelle erfolgt durch einen Antrieb mit Führungsgliedern, die beispielsweise als linienförmiges Schubglied ausgebildet sind. Diese Antriebsglieder sind ebenfalls verdeckt in Führungsschienen geführt. Zum Abschatten des Heckfensters ist eine Rollobahn mit trapezförmiger Gestalt vorgesehen, die den Seitenrändern des Heckfensters angenähert ist. Trotz der Annäherung an die Form des Heckfensters entsteht links und rechts der Seitenkanten der Rollobahn zu den Seitenrändern des Heckfensters ein Spalt, der nicht nur dem ästhetischen Erscheinungsbild zu modernen Karosserieformen entgegenläuft, sondern darüber hinaus auch Sonnenlicht in das Innere des Fahrzeuges dringen lässt.

Aus der DE 198 03 129 A1 geht ebenfalls ein Sonnenrollo für Fahrzeugheckfenster hervor, bei dem eine Wickelwelle unterhalb einer Hutablage angeordnet ist. Die am freien Ende der Rollobahn befestigte Zugstange ist verschiebbar in Führungsschienen geführt. Die Rollobahn wird durch eine schlitzförmige Ausnehmung in der Hutablage herausgeführt. Die schlitzförmige Aufnahme besitzt einen in etwa der Querwölbung im unteren Bereich des Heckfensters angepassten bogenförmigen Verlauf. In Verbindung mit einer ebenfalls in Anpassung an das Heckfenster gekrümmten Zugspanne soll eine Wölbungsanpassung der ausgezogenen Rollobahn an die Heckscheibewölbung erreicht werden. Dennoch sind die seitlichen Spalte bei ausgezogenem Zustand zwischen der Seitenkanten der Rollobahn und den Seitenrändern der Heckscheibe gegeben, durch welche das Sonnenlicht ins Fahrzeuginnere gelangt.

Die Anpassung an die Wölbung des Heckfensters weist den Nachteil auf, dass der rechte und linke Spalt durch eine Faltenbildung vergrößert wird. Um diese Faltenbildung der Rollobahn in ausgezogenem Zustand zu vermeiden, ist zusätzlich zwischen einer schlitzförmigen Führungskante in der Hutablage und der Wickelrolle ein Zugelement vorgesehen. Dieses Zugelement weist einen Führungsklotz auf, der auf einer Führungsstange verschiebbar gegen eine Schraubendruckfeder angeordnet ist. Die Führungsstange ist an einer Konsole befestigt. Die Schraubendruckfeder stützt sich an einer Konsole ab und ermöglicht, dass auf die Rollobahn eine Querspannung aufgebracht wird, um die Bahn straff zu halten. Hierfür ist in Führungsklotzen eine Aufnahmebohrung und ein Schlitz vorgesehen, in dem ein verdickter Randbereich der Rollobahn geführt ist. Durch dieses unterhalb der Hutablage angeordnete Zugelement soll durch Straffung der Rollenbahn zur Querrichtung die Faltenbildung vermieden werden. Eine hinreichende Abschattung trotz der Einbringung einer Querwölbung und der Vermeidung einer Faltenbildung zur Verringerung einer Aufheizung des Fahrzeuginnenraumes ist nicht gegeben.

Der Erfindung liegt deshalb das technische Problem zugrunde, ein Fensterrollo derart auszubilden, dass eine einteilige Rollobahn eine im Wesentlichen vollständige Abschattung eines Fensters ermöglicht.

Zur Lösung dieses Problems schlägt die EP 1 188 591 A1 bereits ein Fensterrollo mit den Merkmalen des Oberbegriffs des Patentanspruchs 1 vor. Die seitlichen Führungselemente sind dort durch V-förmige Keder gebildet, die jeweils an den beiden seitlichen Kanten der Rollobahn angeordnet sind. Jeder Keder setzt sich aus einem ersten bandförmigen Abschnitt und einem zweiten bandförmigen Abschnitt zusammen, die an einer spitzen Ecke ineinander übergehen. Einer der beiden bandförmigen Abschnitte bildet eine Lippe oder Leiste, die in entspanntem Zustand schräg gegenüber dem anderen bandförmigen Abschnitt verläuft. Die beiden Abschnitte bilden ein V, dessen Spitze in eine Nut einer Führungsleiste hineinragt. Der Keder besteht aus einem federnden elastischen Material, so dass beide Abschnitte flach aufeinander geklappt werden können.

Die beiden flach aufeinander geklappten Abschnitte haben zusammen eine Dicke, die beim Aufwickeln zu beachten ist.

Diese Aufgabe wird erfindungsgemäß durch die Merkmale des Anspruchs 1 gelost. Weitere vorteilhafte Ausgestaltungen und Weiterbildungen sind in den weiteren Ansprüchen angegeben.

Durch die Ausgestaltung einer Rollobahn, welche zumindest quer zur Auf- und Abwickelrichtung der Rollobahn aus einem dehnbaren Material ausgebildet ist, wird eine flexible Anpassung der Rollobahn an die Geometrie eines Fensters eines Kraftfahrzeuges ermöglicht. Dadurch wird eine wesentlich verbesserte Schutzwirkung gegen einfallende Sonnenstrahlen erzielt. An seitlichen Kanten der Rollobahn sind zumindest abschnittsweise Führungselemente vorgesehen, so dass die seitlichen Kannten der Rollobahn zumindest sehr nahe an oder in Führungsschienen geführt sind. Dadurch werden die seitlichen Spalte, die beispielsweise trapezförmigen Rollobahnen entstehen, überbrückt.

Nach der Erfindung ist vorgesehen, dass vollständig entlang der seitlichen Kanten der Rollobahn Führungselemente vorgesehen und in Führungsschienen geführt sind. Dadurch wird eine vollständige Abschattung erzielt. Durch die Ausgestaltung der Rollobahn aus einem dehnbaren Material, das zumindest zu Seitenrändern des Fensters dehnbar ist, kann eine Anpassung an unterschiedliche Geometrien der Fenster ermöglicht sein. Somit können beispielsweise trapezformig ausgestaltete Fenster, wie beispielsweise Heck - oder Frontscheiben, vollständig abgeschattet werden. Des Weiteren können auch Seitenfenster abgeschattet werden, bei denen ein Seitenrand stärker geneigt ist als der gegenüberliegende Seitenrand des Fensters. Dies ist beispielsweise sowohl in Fahrer- oder Beifahrertüren als auch in Seitenfenstern bei Kombimodellen der Fall. Darüber hinaus besteht auch die Möglichkeit, Dachhimmel abzuschatten.

Nach der Erfindung ist vorgesehen, dass die an den seitlichen Kanten der Rollobahn angeordneten Führungselemente in den die Führungsstücke der Zugstange aufnehmenden Führungsschienen geführt sind. Dadurch kann eine Reduzierung im Bauraum und eine Reduzierung der Bauteile erzielt werden, indem eine linke und rechte seitliche Führung eingesetzt wird.

Vorteilhafterweise ist vorgesehen, dass das Führungsstück des Zugstabes den Führungsabschnitt der an seitlichen Kanten der Rollobahn angreifenden Führungselemente durchquert. Dadurch kann eine kompakte Bauweise erzielt werden. Gleichzeitig wird dadurch ermöglicht, dass die durch den Zugstab gebildete Zugebene und die Führungsebene für die seitlichen Kanten der Rollobahn in einer gemeinsamen Ebene liegen, um zusätzlich auftretende Spannungen zu vermeiden. Der Führungsabschnitt des Führungselementes kann bevorzugt rechtwinklig zur Rollobahn oder in einem stumpfen Winkel zur Ebene der Rollobahn angeordnet sein.

Bevorzugt ist vorgesehen, dass die Führungselemente, die an den seitlichen Kanten vorgesehen sind, zusätzlich an der Zugstange und/oder den Führungsstücken angreifen. Dadurch können die Führungselemente neben der Aufnahme der Kraft zur Erzielung einer Querdehnung gleichzeitig eine gleichmäßige Führung der Rollobahn in Auf- und Abwickelrichtung übernehmen.

Somit wurden Scherkräfte oder Spannungen innerhalb der Rollobahn vermieden, die durch die Krafteinwirkung der Zugstange in Auf- und Abwickelrichtung und durch die Führungselemente, die rechtwinklig dazu wirken, auftreten können. Zusätzlich kann eine verzugsfreie Anordnung der Rollenbahn in abgewickeltem Zustand gegeben sein, so dass ein gleichmäßiges Maschenbild erhalten bleibt.

Zur Führung des Führungselementes zwischen der Aufwickelwelle und der Führungsschiene ist nach einer vorteilhaften Ausgestaltung der Erfindung vorgesehen, dass eine Umlenk- oder Ausrichteinheit angeordnet ist. Dadurch wird ermöglicht, dass die Führungselemente aus einer Aufwickelposition in eine Führungsposition übergeführt werden. Gleichzeitig sind bevorzugt Einführhilfen zur Führungsschienen vorgesehen, so dass eine Zwangsführung gegeben ist, die zu einer hohen Betriebssicherheit führt.

Die zumindest eine Umlenk- oder Ausrichteinheit für das bandförmige Führungselement weist vorteilhafterweise eine Ausrichtung auf, die eine Zwischenlage zwischen der Führungsschiene und der aufgewickelten Position umfasst. Dadurch wird auch eine verschleißarme Ausgestaltung ermöglicht. Zusätzlich kann durch die zumindest eine Umlenk- und Ausrichteinheit die Leichtgängigkeit beim Auf- und Abwickeln erhöht werden.

Die dehnbare Rollobahn ist vorteilhafterweise als Maschenware aus textilem Material, aus einem aus Textil und Kunststoff bestehenden Gemisch-oder Verbundmaterial, aus einem netzförmigen Kunststoff, aus einer Kunststoffbahn mit elastischen Anteilen oder aus einer elastischen Folie hergestellt. Die zum Einsatz kommenden Materialien weisen vorteilhafterweise zumindest eine Dehnfähigkeit quer zur Auf- und Abwickelrichtung der Rollobahn auf. Es können auch Materialien eingesetzt werden, die sowohl in Auf- und Abwickelrichtung als auch quer zur Auf- und Abwickelrichtung dehnbahr sind, wobei deren dehnbaren Anteile gleich oder voneinander abweichen können. Die zum Einsatz kommenden Materialien sind vorteilhafterweise lichtbeständig, das heißt, dass die dehnbaren Eigenschaften selbst bei längerer Sonneneinstrahlung erhalten bleiben und eine geringe Sprödigkeit aufweisen. Darüber hinaus sind diese Materialien hitzebeständig und behalten bei Erwärmung die Dehnfähigkeit beziehungsweise ihre Spannung bei. Bevorzugt werden farbechte Materialien eingesetzt.

Nach einer weiteren vorteilhaften Ausgestaltung der Erfindung ist vorgesehen, dass die dehnbare Rollobahn eine Maschenbildung aufweist, deren Dehnfähigkeit quer zum Auf- und Abwickelrichtungsglied gleich oder größer als in Auf- und Abwickelrichtung ist. Dadurch kann die Dehnfähigkeit der Rollobahn durch die Art der Maschenbildung unterstützt werden. Beispielsweise können trapezförmige Maschen mit annähernd gleicher Kantenlänge ausgebildet sein, deren längere Achse in der Dehnungsrichtung quer zur Auf- und Abwickelrichtung liegt. Beim Dehnen der Rollobahn werden diese Trapeze in angenäherte schlitzförmige Öffnungen übergeführt, so dass deren Abschattungswirkung erhalten bleibt und gleichzeitig eine sichtdurchlässige Ausgestaltung gegeben ist. Weitere Geometrien in runder, ovaler und/oder eckiger Ausgestaltung sind möglich.

Nach einer weiteren vorteilhaften Ausgestaltung der Erfindung ist vorgesehen, dass die Materialbahn in einem zumindest in einer Richtung gedehnten Zustand eine Abschattung von wenigstens 20 % bewirkt. Dadurch kann unter Berücksichtigung der Erstreckung der Rollobahn über die gesamte Fensterfläche beziehungsweise des der Sonneneinstrahlung zur Verfügung stehenden Raumes eine hinreichende Abschattung gegeben sein, da gleichzeitig die sonst gemäß dem Stand der Technik vorhandenen seitlichen Spalte abgeschattet werden.

Die dehnbare Rollobahn ist vorteilhafterweise zumindest mit einer Vorspannung beziehungsweise einer Dehnung von wenigstens 3 % gegenüber einem unbelasteten Zustand in einem Bereich, in dem die Führungsschienen einen geringsten Abstand aufweisen, gedehnt oder gespannt halten. Dadurch wird sichergestellt, dass die Rollobahn im Einsatz nicht durchhängt, sondern straff zwischen den Führungsschienen einerseits und der Zugstange und Aufwickelwelle andererseits angeordnet ist.

Die Rollobahn ist nach einer bevorzugten Ausführungsform der Erfindung aus einem Material hergestellt, das zumindest um 5 % gegenüber einem unbelasteten Zustand dehnbar ist. Dadurch können auch sehr große Differenzen im Abstand der einander gegenüberliegenden Führungsschienen überwunden und eine vollständige Abschattung des Fensters erzielt werden. Die Materialbahn ist bevorzugt in einem Bereich zwischen in etwa 10 bis 20 % dehnbar, so dass trotz der bereits aufgebrachten Vorspannung eine Mindestdehnbarkeit gegeben ist.

Die an den seitlichen Kanten der Rollobahn angeordneten Führungselemente sind vorteilhafterweise aus einem zugfesten und biegefähigen Material, insbesondere als Zugschnur, ausgebildet. Diese Führungselemente erstrecken sich vollständig entlang der seitlichen Kanten. Durch die Zugfestigkeit und die Biegefähigkeit ist ein einfacher Auf- und Abwickelvorgang sowie eine hinreichende Kraftaufnahme zur Dehnung der Rollobahn gegeben.

Die Führungselemente können beispielsweise durch ein Kunststoffband, das insbesondere Zusätze zur Erhöhung der Gleitfähigkeit aufweisen kann, wie beispielsweise ein PTFE-Band, ausgebildet sein. Des Weiteren können faserverstärkte Kunststoffbänder, Textilbänder mit biegsamem Kern, Metallbänder oder dergleichen, eingesetzt werden. Diese Bänder sind bevorzugt flach ausgebildet, so dass beim Aufwickeln ein geringer Bauraum eingenommen wird. Die Stirnseiten der Bänder können gerundet oder gebördelt ausgebildet sein. Ebenso können Verdickungen zur Führung vorgesehen sein.

Die seitliche Kante der Rollobahn ist nach einem bevorzugten Ausführungsbeispiel zum Führungselement durch Klemmen, Einkleben, Nähen, Schweißen, wie beispielsweise durch Wärme oder Ultraschall, durch Einwirken oder Pressen befestigt. Ebenso kann eine einstückige Ausbildung durch Aufwickeln des Randbereiches mit oder ohne einem Einlegeteil gegeben sein.

Die Aufwickelwelle kann vorteilhafterweise konisch ausgebildet sein, so dass eine Selbstzentrierung der Rollobahn während dem Aufwickeln erfolgt.

Nach einer weiteren vorteilhaften Ausführungsform der Erfindung ist vorgesehen, dass die Aufwickelwelle während dem Aufwickelvorgang wandert. Durch eine zumindest geringfügige Links- und Rechtsbewegung kann erzielt werden, dass die Führungselemente jeweils benachbart im aufgewickelten Zustand zueinander aneinander liegen, wodurch eine Verringerung des Bauraumes gegeben ist.

Der Einsatz der dehnbaren Rollobahn, beispielsweise in Kraftfahrzeugen, ist an jedem Fenster oder an jeder Scheibe, möglich. Die Einbaulage kann hierzu beliebig gewählt werden, um eine vollständige Abschattung einer das Sonnenlicht in den Innenraum führenden Fläche zu ermöglichen.

Die Erfindung sowie weitere vorteilhafte Ausführungsformen und Weiterbildungen derselben werden im Folgenden anhand den in den Zeichnungen dargestellten Beispielen näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Darstellung eines Heckscheibenbereiches von einem Personenkraftwagen mit einem geschlossenen Fensterrollo,
- Figur 2: ein prinzipieller Aufbau eines Fensterrollos,
- Figur 3: eine perspektivische Detaildarstellung einer an einer Führungsschiene geführten Rollobahn,
- Figur 4: eine schematische Detaildarstellung einer Führungsschiene,
- Figur 5: eine schematische Schnittdarstellung einer aufgewickelten und teilweise abgewickelten erfindungsgemäßen Rollobahn,
- Figur 6: eine perspektivische Darstellung einer Führungsschiene und einer Aufwickelwelle, zwischen denen eine Ausrichteinheit angeordnet ist und
- Figur 7: eine perspektivische Darstellung einer alternativen Ausführungsform einer Führungsschiene.

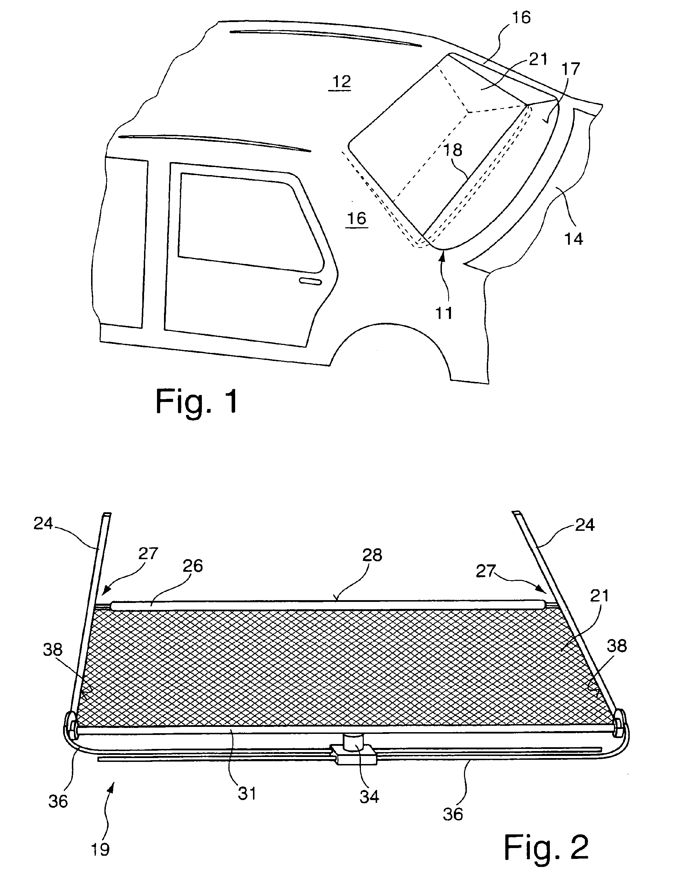

In Figur 1 ist perspektivisch ein Heckscheibenbereich mit einem konvex nach außen gewölbten Heckfenster 11 dargestellt. Das Heckfenster 11 weist eine Trapezform mit den in Aufwärtsrichtung konvergierenden Seitenkanten auf. Zwischen einem Dach 12 und einem Kofferraum 14 ist jeweils eine C-Säule 16 vorgesehen. Im Inneren des Fahrzeuges befindet sich zwischen den C-Säulen 16 eine Hutablage 17, die sich bis zu einer Rücksitzlehne erstreckt. In der Hutablage 17 ist eine schlitzförmige Öffnung 18 vorgesehen, aus der eine Rollobahn 21 herausgeführt ist.

Der prinzipielle Aufbau eines Fensterrollos 19 ist in Figur 2 dargestellt. Dieser prinzipielle Aufbau ist auch auf andere Fenster- oder Scheibenbereiche beziehungsweise abzuschattende Bereiche übertragbar.

Das Fensterrollo 19 umfasst zwei einander gegenüberliegende Führungsschienen 24, die neben den seitlichen Rändern des Heckfensters 11 in die C-Säule 16 integriert sind, so dass beispielsweise ausschließlich Führungsschlitze zu sehen sind. In diesen Führungsschienen 24 ist ein Zugstab 26 mit jeweils einem Führungsstück 27 geführt. Der Zugstab 26 ist mit einer Kante 28 der Rollobahn 21 verbunden. Dieser Kante 28 gegenüberliegend ist eine Aufwickelwelle 31 vorgesehen, die einem Ende 32 der Führungsschienen 24 oder nahe diesem Ende 32 der Führungsschiene 24 zugeordnet ist.

Die Führungsschiene 24 besteht beispielsweise aus einem Aluminiumstrangpressprofil. Alternativ kann ebenfalls auch ein Kunststoffprofil mit und ohne Einlegeteil vorgesehen sein. Das Ende 32 der Führungsschiene 24 sowie die Aufwickelwelle 31 sind beispielsweise ünterhalb der Hutablage 17 vorgesehen. Ebenso ist unterhalb der Hutablage eine Antriebseinheit 34 angeordnet, die aus einem elektrischen Antrieb besteht und ein linkes und rechtes Antriebsglied 36 angreift, wodurch der Zugstab 26 nach oben geführt und die Rollobahn 21 abgewickelt wird. Hierfür können vorteilhafterweise Schubglieder vorgesehen sein, die insbesondere als Bürstenelemente oder Spiralantriebe ausgebildet sind. Alternativ kann vorgesehen sein, dass Seilzugelemente vorgesehen sind, um beispielsweise ein Abwickeln der Rollobahn über eine Zugspannung anzusteuern. Die Antriebsglieder 36 sind ebenfalls in den Führungsschienen 24 geführt.

Die Aufwickelwelle 31 umfasst bevorzugt zumindest ein Energiespeicherelement. Beispielsweise beim angetriebenen Abwickeln wird das Energiespeicherelement aus einem Ruhezustand in einen Kraftspeicherzustand übergeführt. Sobald ein Aufwickeln gewünscht ist, erfolgt durch Abgabe der Energie ein selbständiges Aufwickeln der Rollobahn. Insbesondere ist als Energiespeicherelement zumindest eine Schrauben- oder Torsionsfeder vorgesehen.

Die Antriebseinheit und die Aufwickelwelle 31 können in einer Kassette vorgesehen sein, so dass eine Baueinheit geschaffen ist, die in unterschiedliche Bauräume einsetzbar ist. Diese Kassette kann vorteilhafterweise schwenkbar oder zumindest geringfügig seitlich verschiebbar gelagert sein, so dass eine zusätzliche Ausrichtung und Anpassung an den Einbauort gegeben ist.

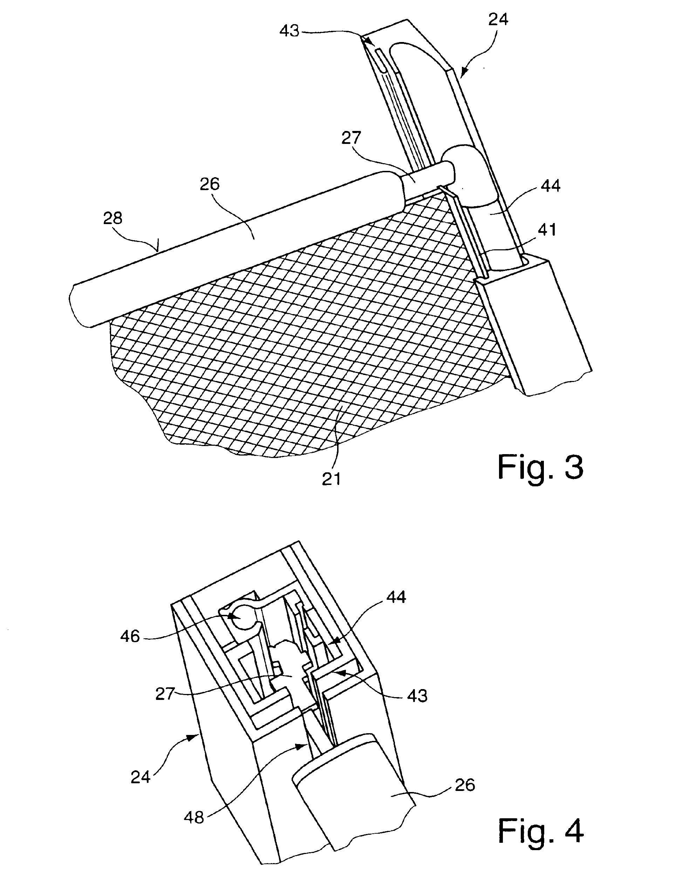

Die erfindungsgemäße Rollobahn 21 besteht aus einem dehnbaren Material. An seitlichen Kanten 38 der Rollobahn 21 sind Führungselemente 41 angeordnet, wie aus Figur 3 näher dargestellt ist. Diese Führungselemente 41 sind in der Führungsschiene 24 geführt. Dadurch wird ermöglicht, dass ein vollständiger Bereich zwischen den Führungsschienen 24 sowie zwischen dem Zugstab 26 und der Aufwickelwelle 31 beziehungsweise einer schlitzförmigen Öffnung, aus der die Rollobahn 21 aus einem Verstauraum herausgeführt wird, von der Rollobahn 21 eingenommen wird. Aufgrund der dehnbaren Anordnung der Rollobahn 21 kann ein Längenausgleich zwischen den C-Säulen 16 gegeben sein.

Die dehnbare Ausgestaltung der Rollobahn 21 kann vorteilhafterweise beim Herausführen der Rollobahn 21 aus einem Verstauraum durch einen geradlinigen oder einen bogenförmigen Schlitz gegeben sein. Durch die seitliche, zumindest abschnittsweise Führung der Rollobahn 21 kann eine vollständige Abschattung erfolgen.

In Figur 3 ist ein bandförmiges Führungselement 41 dargestellt, das zugfest und biegefähig ist. Insbesondere ist ein PTFE-Band vorgesehen, das zusätzlich gute Gleiteigenschaften und Leichtgängigkeit aufweist. Dieses bandförmige Führungselement 41 ist rechtwinklig zur Erstreckungsebene der Rollobahn 21 vorgesehen und in einem Führungsabschnitt 43 geführt. Dieser Führungsabschnitt läuft parallel zum Führungsabschnitt 44 des Führungsstückes 27. Vorteilhafterweise durchquert der das Führungsstück 27 den Führungsabschnitt 43, so dass ein gemeinsamer Schlitz 48 der Führungsschiene 24 für das Führungselement 41 und den Zugstab 26 in Erscheinung tritt, sofern die Rollobahn 21 aufgewickelt ist. Dadurch sind keine Teile des Fensterrollos im Sichtbereich störend vorgesehen. Zusätzlich kann vorgesehen sein, dass in dem Führungsabschnitt 43 eine aufwickelbare oder verschiebbare Blende, eine Gummilippe oder zwei einander gegenüberliegende Gummilippen oder eine bürstenförmigen Abdeckung (eine oder zwei einander gegenüberliegende Bürstenleisten, die sich vorzugsweise berühren) vorgesehen ist oder sind, die beim Auf- und Abwickeln der Rollobahn 21 betätigt wird oder werden und den Schlitz 48 der Führungsschiene 24 entsprechend öffnen oder schließen.

Die Führungsstücke 27 sind in dem Zugstab 26 längsbeweglich gelagert, so dass ein Längenausgleich in Abhängigkeit des Abstandes der Führungsschienen 24 ermöglicht ist. Das Führungsstück 27 wiest eine Öffnung auf, in der das Antriebsglied 36 eingesteckt, eingeklemmt oder angespritzt ist.

In Figur 4 ist ein Ausführungsbeispiel einer Profilierung der Führungsschiene 24 näher dargestellt. Zur Aufnahme des Führungselementes 41 ist ein rechteckförmiger Führungsabschnitt 43 vorgesehen. Der Querschnitt des Führungsabschnitts 43 ist an das Führungselement 41 angepasst. Dahinter erschließt sich der Führungsabschnitt 44 für das Führungsstück 27. Dieser Führungsabschnitt 44 weist einen kreisförmigen Bereich 46 auf, in dem das Antriebsglied 36 geführt ist. Durch die eng anliegende Führung wird eine Geräuschminimierung erzielt. Das Führungsstück 27 weist mehrere Führungsabschnitte auf, durch die eine torsionsfreie Krafteinleitung über das Antriebsglied in den Zugstab ermöglicht ist, um eine leichtgängige Auf- und Abbewegung zu erzielen und eine Verkantung zu vermeiden. Die Führungsabschnitte 43 und 44 sind durch einen gemeinsamen Schlitz 48 zugänglich. Dadurch liegt die Führung der seitlichen Kanten 38 der Rollobahn 21 und die Führung des Zugstabes 26 in einer Ebene.

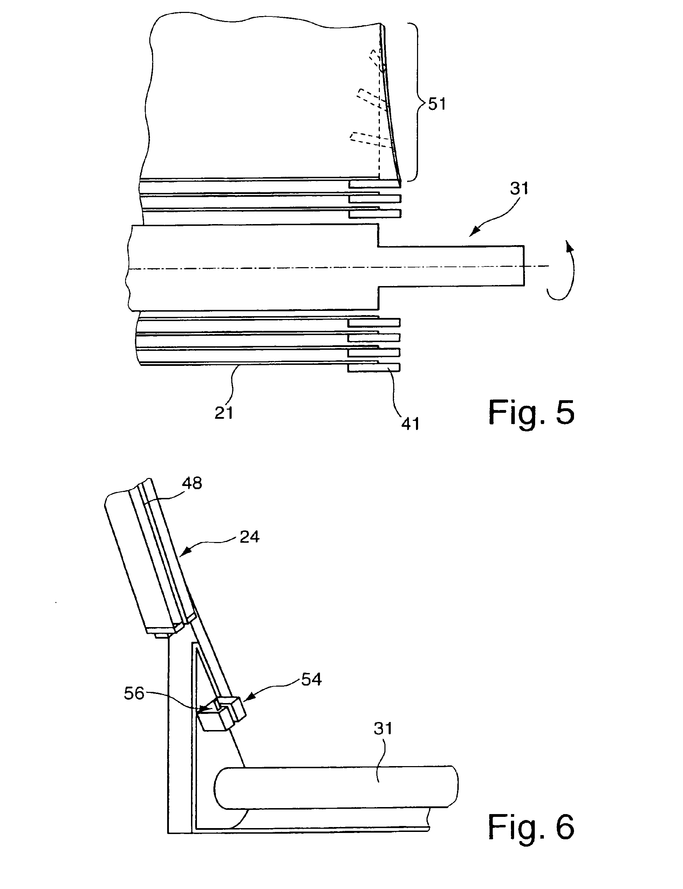

In Figur 5 ist eine schematische Ansicht der Aufwickelwelle 31 dargestellt, auf der beispielsweise drei Lagen der Rollobahn 21 übereinander aufgewickelt sind. Ein Abschnitt 51 verdeutlicht die Überführung des Führungselementes 41 aus einer Aufwickelposition in eine Führungsposition im Führungsabschnitt 43. Ergänzend wird diesbezüglich auf Figur 6 Bezug genommen. Zwischen einer Aufwickelwelle 31 und der Führungsschiene 24 ist eine Ausrichteinheit oder Umlenkeinheit 54 dargestellt, durch welche die Ausrichtung des Führungselementes 41 zwangsweise geführt und erleichtert ist. In Abhängigkeit des Bauraumes können eine oder mehrere Ausrichteinheiten 54 vorgesehen sein. Die Ausrichteinheit kann auch schienenförmig ausgebildet sein, so dass beispielsweise der Abstand zwischen der Ausrichteinheit 54 und der Führungsschiene 24 gemäß Figur 6 vollständig überbrückt ist.

Die seitliche Kante 28 greift bevorzugt mittig am bandförmigen Führungselement 41 an, so dass dieses um 90° gedreht oder geklappt wird, um aus einer Aufwickelposition in einen abgewickelten Zustand übergeführt zu werden. Die Ausrichteinheit 54 weist hierfür beispielsweise einen Führungsschlitz 56 auf, der eine mittlere Stellung von beispielsweise 45° einnimmt. In Abhängigkeit des Abstandes zur Aufwickelwelle 31 oder zum Ende 32 der Führungsschiene 24 kann die Winkelzahl des Schlitzes 56 größer oder kleiner ausgebildet sein.

Durch die vollständige Einbindung der seitlichen Kanten 38 der Rollobahn 21 in die Führungsschiene 24, wie dies insbesondere aus Figur 2 und 3 hervorgeht, wird ermöglicht, dass eine vollständige Abschattung des Fensters 11 gegeben ist. Dies gilt auch für den Einsatz bei anderen Fenstern oder Scheiben.

Alternativ kann vorgesehen sein, dass anstelle eines durchgehenden Führungselementes 41 mehrere mit Abstand zueinander angeordnete Einzelführungselemente vorgesehen sind, die ebenfalls in einem Führungsabschnitt 43 geführt sind. Diese einzelnen Führungselemente können in gleichen oder unregelmäßigen Abständen zueinander angeordnet sein. Dadurch kann beim Aufwickeln ein geringer Außenumfang entstehen. Bei dieser Ausführungsform ist bevorzugt vorgesehen, dass der Führungsabichnitt 43 weiter innerhalb der Führungsschiene 24 vorgesehen ist, um die seitlichen Abschnitte, an denen ein Führungselement 41 nicht angreift, innerhalb dem Schlitz 48 der Führungsschiene 24 gespannt halten zu können. Alternativ kann vorgesehen sein, dass der Führungsabschnitt 43 eine Art lippenförmig hervorstehende Ausnehmung aufweist. Dadurch kann ebenfalls eine vollständige oder nahezu vollständige Abschattung der seitlichen Randbereiche über die seitlichen Kanten 38 innerhalb oder an die Führungsschiene 24 angrenzend erzielt werden, sofern die einzelnen Führungselemente mit Abstand zueinander an den seitlichen Kanten 38 der Rollobahn 21 angreifen. Nach einer weiteren alternativen Ausführungsform kann das Führungselement kederförmig ausgebildet sein. Diese Ausgestaltung wird durch einen verdickten Randbereich ermöglicht.

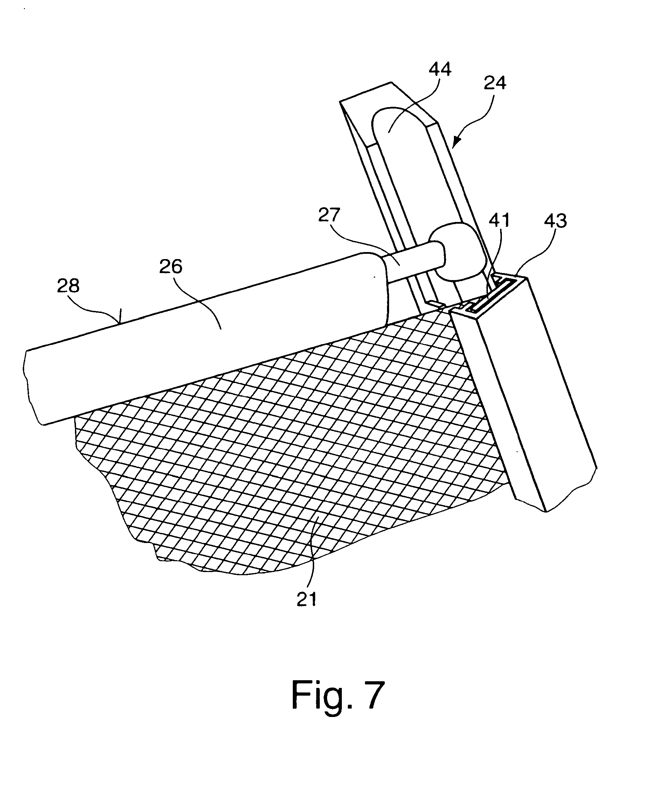

In Figur 7 ist eine alternative Anordnung eines bandförmigen Führungselementes 41 zu Figur 3 dargestellt. Bei dieser Ausführungsform ist der Führungsabschnitt 43 für das Führungselement 41 parallel oder in einem spitzen Winkel zum Rollobehang 21 vorgesehen. Benachbart zum Führungsabschnitt 43 ist ein Führungsabschnitt 44 vorgesehen, der ein Führungsstück 27, das gegenüber dem Zugstab 26 vorteilhafterweise abgekröpft ist, aufnimmt. Dadurch ist ermöglicht, dass beispielsweise links und rechts der Ebene der Rollobahn 21 Führungsabschnitte 43 und 44 angeordnet sind. Diese Anordnung ist platzsparend. Die Führungsabschnitte 43 und 44 sind in einem gemeinsamen Profil ausgebildet. Des Weiteren kann vorgesehen sein, dass beispielsweise der Führungsabschnitt 43 an einem Profil mit dem Führungsabschnitt 44 befestigbar ist.

Bei einem parallel zur Rollobahn 21 angeordnetem Führungsabschnitt 43 ist im Verbindungsbereich zwischen der seitlichen Kante 38 des Rollobehanges 21 und dem Führungselement 41 ein Abstandselement oder das Führungselement 41 bauchig oder mit einer hervorstehenden Nut versehen, so dass der Rollobehang 21 ohne Reibung an einem Außenrand des Führungsabschnitts 43 vorbeigeführt werden kann. Alternativ kann vorgesehen sein, dass der Führungsabschnitt 43 in einem spitzen Winkel zur Ebene der Rollobahn angeordnet ist, um ein geradliniges Herausführen des Randabschnittes der Rollobahn 21 zum Führungsabschnitt 43 zu ermöglichen.

Bei dieser Ausführungsform ist das Führungselement 41 bevorzugt aus Metall ausgebildet. Der Führungsabschnitt 43 kann aus Kunststoff ausgebildet sein. Ebenso können weitere Materialkombinationen mit guten Gluteigenschaften vorgesehen sein. Beispielsweise kann auch ein Aluminiumband oder ein beschichtetes Metallband oder dergleichen vorgesehen sein.

Diese Ausführungsform weist des Weiteren den Vorteil auf, dass bei einem parallelen oder in einem spitzen Winkel zur Rollobahn 21 angeordneten Führungsabschnitt 43 auf eine Umlenkeinheit zum Auf- und Abwickeln des Rollobehanges 21 auf und von der Aufwickelwelle 31 verzichtet werden kann. Selbst bei einem Winkel des Führungsabschnitts 43 bis zu 60° zum Rollobehang 21, bei dem der Führungsabschnitt 43 beziehungsweise das Führungselement 41 zur Ebene der Rollobahn 21 geneigt ist, kann eine problemlose Aufwicklung erfolgen, bei der der Führungsabschnitt 43 parallel zur Rollobahn 21 zum Anliegen auf der Aufwickelwelle 31 kommt.

Durch die Anordnung des bandförmigen Führungselementes 41 kann der Führungsabschnitt 43 ausgehend von einer rechtwinklig zum Rollobehang 21 angeordneten Position, wie dies in Figur 4 dargestellt ist, in einem stumpfen Winkel zur Rollobahn als auch in einer geschwenkten Position vorgesehen sein, wie dies beispielsweise in Figur 7 dargestellt ist. Diese geschwenkte oder geneigte Position zur Rollobahn 21 kann bis zur parallelen Ausrichtung des Führungselementes 43 zur Rollobahn 21 erfolgen, wobei dies sowohl zu beiden Seiten der Rollobahn 21 hin erfolgen kann. Der Führungsabschnitt 43 steht mit dem Führungsabschnitt 44 in Verbindung. In Abhängigkeit des Bauraumes wird dementsprechend der Führungsabschnitt 44 vorgesehen und gegebenenfalls das Führungsstück 27 abgewinkelt oder abgekröpft. Dadurch kann eine flexible und bauraumsparende Anordnung geschaffen sein. Zur einfachen Anordnung des Führungsabschnittes 44 zum Führungsabschnitt 43 können die Außenabmessungen derart aufeinander abgestimmt sein, dass diese in einfacher Weise zu einem gemeinsamen Profil zumindest abschnittsweise ineinander gesteckt oder ineinander greifen können. Diese vorteilhafte Ausführungsform gilt auch für die Anordnung gemäß den Figuren 3 und 4.

Die in den Ausführungsbeispielen beschriebenen Merkmale sind jeweils für sich erfindungswesentlich und können in beliebiger Weise miteinander kombiniert werden.

## Patentansprüche

1. Fensterrollo für ein Kraftfahrzeug, mit wenigstens einer Aufwickelwelle (31), die drehbar gelagert ist, mit wenigstens einer Rollobahn (21), die mit einer Kante an der Wickelwelle (31) befestigt ist, mit einem längsverschieblichen Zugstab (26), der mit einer von der Wickelwelle (31) abliegenden Kante (28) verbunden ist, mit wenigstens zwei einander gegenüberliegenden Führungsschienen (24), von denen sich jede seitlich neben einer aufgespannten Rolllobahn (21) erstreckt und die jeweils wenigstens einen Führungsabschnitt (44) enthalten, in denen zumindest ein Führungsstück (27) des Zugstabes (26) geführt ist, und mit einer Antriebseinrichtung (34) zum Bewegen des Zugstabes (26) längs der Führungsschiene (24), wobei die Rollobahn (21) aus einem zumindest quer zur Auf- und Abwickelrichtung dehnbaren Material ausgebildet ist und deren seitlichen Kanten (38) zumindest abschnittsweise durch Führungselemente (41) in Führungsschienen (24) geführt sind, wobei sich die Führungselemente (41) jeweils vollständig entlang der seitlichen Kanten (38) der Rollobahn (21) erstrecken
**dadurch gekennzeichnet,**
**dass** die Führungselemente (41) in den die Führungsstücke (27) des zugstabes (26) aufnehmenden Führungsschienen (24) geführt sind.

2. Fensterrollo nach einem der vorhergehenden Ansprüche, **dadurch gekennzeichnet, dass** die Führungsschiene (24) zumindest zwei einander zugeordnete Führungsabschnitte (43, 44) aufweist und vorzugsweise ein Führungsstück (27) des Zugstabes (26) den Führungsabschnitt (43) der Führungselemente (41) zur Anordnung im Führungsabschnitt (44) durchquert.

3. Fensterrollo nach einem der vorhergehenden Ansprüche, **dadurch gekennzeichnet, dass** die an den seitlichen Kanten (38) vorgesehenen Führungselemente (41) zumindest an dem Zugstab (28) oder den Führungsstücken (27) angreifen.

4. Fensterrollo nach einem der vorhergehenden Ansprüche, **dadurch gekennzeichnet, dass** zwischen einem der Aufwickelwelle (31) zugeordneten Ende (32) der Führungsschiene (24) und der Aufwickelwelle (31) zumindest eine Ausricht- oder Umlenkeinheit (54) vorgesehen ist, welche das Führungselement(41) aus einer Führungslage in eine Aufwickellage zumindest teilweise überführt.

5. Fensterrollo nach Anspruch 4, **dadurch gekennzeichnet, dass** die zumindest eine Ausricht- oder Umlenkeinheit (54) für ein bandförmiges Führungselement (41) einen Führungsschlitz (56) aufweist, dessen Ausrichtung zwischen einer Aufwickellage und einer Führungslage des Führungselements (41) vorgesehen ist und vorzugsweise eine gemittelte Zwischenposition aufweist.

6. Fensterrollo nach einem der vorhergehenden Ansprüche, **dadurch gekennzeichnet, dass** der Führungsabschnitt (43) parallel oder in einem spitzen Winkel zur Rollobahn (21) vorgesehen ist.

7. Fensterrollo nach Anspruch 6, **dadurch gekennzeichnet, dass** ein Führungsstück (27) gekröpft ausgebildet und benachbart am Führungsabschnitt (43) im Führungsabschnitt (44) geführt ist.

8. Fensterrollo nach einem der vorhergehenden Ansprüche, **dadurch gekennzeichnet, dass** die Rollobahn (21) als Maschenware aus textilem Material, aus einem aus Textil und Kunststoff bestehenden Gemisch- oder Verbundmaterial, aus einem netzförmigen Kunststoff, aus einer Kunststoffbahn mit elastischen Anteilen oder aus einer elastischen Folie hergestellt ist.

9. Fensterrollo nach einem der vorhergehenden Ansprüche, **dadurch gekennzeichnet, dass** die Rollobahn (21) eine Maschenbildung aufweist, deren Dehnfähigkeit quer zur Auf- und Abwickelrichtung der Rollobahn (21) größer als in Auf- und Abwickelrichtung der Rollobahn (21) ist.

10. Fensterrollo nach einem der vorhergehenden Ansprüche, **dadurch gekennzeichnet, dass** die Rollobahn (21) in gedehntem und ungedehntem Zustand einer Abschattung von wenigstens 20% bewirkt.

11. Fensterrollo nach einem der vorhergehenden Ansprüche, **dadurch gekennzeichnet, dass** die seitlichen Kanten (38) der Rollobahn (21) in einem Bereich, in dem die Führungsschiene (24) ihren geringsten Abstand aufweist, eine Dehnung von wenigstens 3% gegenüber einem unbelasteten Zustand aufweist.

12. Fensterrollo nach einem der vorhergehenden Ansprüche, **dadurch gekennzeichnet, dass** die Rollobahn (21) um wenigstens 5% zum unbelasteten Zustand zur Auf- und Abwickelrichtung dehnbar ist.

13. Fensterrollo nach einem der vorhergehenden Ansprüche, **dadurch gekennzeichnet, dass** die Führungselemente (41) an den seitlichen Kanten (38) aus einem zugfesten und biegefähigen Material, insbesondere als Zugschnur, ausgebildet sind.

14. Fensterrollo nach Anspruch 13, **dadurch gekennzeichnet, dass** die Führungselemente (41) als Kunststoffband, als Textilband mit und ohne biegsamen Kern, als faserverstärktes Kunststoffband, insbesondere als PTFE-Band oder als Metallband, ausgebildet sind.

15. Fensterrollo nach einem der vorhergehenden Ansprüche, **dadurch gekennzeichnet, dass** die seitliche Kante (38) zum zumindest einen Führungselement (41) durch Klemmen, Kleben, Einkleben. Nähen, Schweißen, zumindest durch Wärme oder Ultraschall, Einwirken oder Pressen befestigt ist.

16. Fensterrollo nach einem der vorhergehenden Ansprüche, **dadurch gekennzeichnet, dass** eine wandernde Aufwickelwelle (31) vorgesehen ist.

17. Fensterrollo nach einem der vorhergehenden Ansprüche, **dadurch gekennzeichnet, dass** die dehnbare Rollobahn (21) für Heckscheiben, Eckklappen, Seitenfenster, Dachfenster oder Frontscheiben einsetzbar ist.

## Claims

1. Window roller blind for a motor vehicle, with at least one wind-up shaft (31), which is rotatably mounted, with at least one blind sheet (21), which is fastened to the winding shaft (31) at one edge, with a longitudinally displaceable pull rod (26), which is connected to an edge remote (28) from the winding shaft (31), with at least two opposing guide rails (24), each of which extends laterally adjacent to an opened blind sheet (31) and which respectively contain at least one guide section (44), in which at least one guide piece (27) of the pull rod (26) is guided, and with a drive arrangement (34) for moving the pull rod (26) along the guide rail (24), wherein the blind sheet (21) is configured from a material that is stretchable at least transversely to the wind-up and unwind direction and the side edges (38) thereof are guided, at least in sections, by guide elements (41) in guide rails (24), wherein the guide elements (41) respectively extend fully along the side edges (38) of the blind sheet (21),
**characterised in that**
the guide elements (41) are guided in the guide rails (24) receiving the guide pieces (27) of the pull rod (26).

2. Window roller blind according to one of the preceding claims, **characterised in that** the guide rail (24) has at least two guide sections (43, 44) associated with one another and preferably one guide piece (27) of the pull rod (26) passes through the guide section (43) of the guide elements (41) for arrangement in the guide section (44).

3. Window roller blind according to one of the preceding claims, **characterised in that** the guide elements (41) provided on the side edges (38) act at least on the pull rod (28) or the guide pieces (27).

4. Window roller blind according to one of the preceding claims, **characterised in that** at least one alignment or deflection unit (54), which moves the guide element (41) at least partially out of a guide position into a wind-up position, is provided between an end (32) of the guide rail (24) associated with the wind-up shaft (31) and the wind-up shaft (31).

5. Window roller blind according to claim 4, **characterised in that** the at least one alignment or deflection unit (54) has a guide slot (56) for a band-shaped guide element (41), the alignment of said slot being provided between a wind-up position and a guide position of the guide element (41) and preferably having a centred intermediate position.

6. Window roller blind according to one of the preceding claims, **characterised in that** the guide section (43) is provided parallel to or at an acute angle to the blind sheet (21).

7. Window roller blind according claim 6, **characterised in that** a guide piece (27) is bent at an angle and is guided in the guide section (44) adjacent to the guide section (43).

8. Window roller blind according to one of the preceding claims, **characterised in that** the blind sheet (21) is produced as knitted product from textile material, from a blend or composite material made from textile and plastic, from a net-type plastic, from a plastic web with elastic components or from an elastic foil.

9. Window roller blind according to one of the preceding claims, **characterised in that** the blind sheet (21) has a stitch formation, the stretchability of which is greater transversely to the wind-up or unwind direction of the blind sheet (21) than in the wind-up and unwind direction of the blind sheet (21).

10. Window roller blind according to one of the preceding claims, **characterised in that** the blind sheet (21) causes shading of at least 20% in stretched and non-stretched state.

11. Window roller blind according to one of the preceding claims, **characterised in that** the side edges (38) of the blind sheet (21) have a stretch of at least 3% in relation to an unstressed state in a region, in which the guide rail (24) has its smallest spacing.

12. Window roller blind according to one of the preceding claims, **characterised in that** the blind sheet (21) is stretchable by at least 5% relative to the unstressed state to the wind-up and unwind direction.

13. Window roller blind according to one of the preceding claims, **characterised in that** the guide elements (41) are configured from a tension-resistant and bendable material, in particular a pull cord, on the side edges (38).

14. Window roller blind according to claim 13, **characterised in that** the guide elements (41) are configured as plastic band, as textile band with and without a flexible core, as fibre-reinforced plastic band, in particular as PTFE band or as a metal band.

15. Window roller blind according to one of the preceding claims, **characterised in that** the side edge (38) is fastened to at least one guide element (41) by clamping, gluing, gluing in place, sewing, welding at least by heat or ultrasound, working in or pressing.

16. Window roller blind according to one of the preceding claims, **characterised in that** a shifting wind-up shaft (31) is provided.

17. Window roller blind according to one of the preceding claims, **characterised in that** the stretchable blind sheet (21) is usable for rear windows, tailgates, side windows, roof windows or windscreens.

## Revendications

1. Store à enrouleur pour fenêtre pour un véhicule, comprenant au moins un axe d'enroulement (31) qui est monté tournant, comprenant au moins une bande de store (21) qui est fixée par un bord à l'axe d'enroulement (31), comprenant une barre de traction (26) qui peut coulisser longitudinalement et qui est reliée à un bord (28) éloigné de l'axe d'enroulement (31), comprenant aux moins deux glissières (24) qui sont opposées l'une à l'autre, dont chacune s'étend latéralement près de la bande de store (21) déroulée et qui comportent chacune au moins une partie de guidage (44) dans laquelle au moins une pièce de guidage (27) de la barre de traction (26) est guidée, et comprenant un dispositif d'entraînement (34) pour déplacer la barre de traction (26) le long de la glissière (24), la bande de store (21) étant réalisée dans un matériau extensible au moins transversalement à la direction d'enroulement et de déroulement, et ses bords latéraux (38) étant guidés, au moins par parties, dans les glissières (24) par des éléments de guidage (41), les éléments de guidage (41) s'étendant chacun entièrement le long des bords latéraux (38) de la bande de store (21), **caractérisé en ce que** les éléments de guidage (41) sont guidés dans les glissières (24) qui reçoivent les pièces de guidage (27) de la barre de traction (26).

2. Store à enrouleur pour fenêtre selon une des revendications précédentes, **caractérisé en ce que** la glissière (24) présente au moins deux parties de guidage (43, 44) associées l'une à l'autre, et, de préférence, une pièce de guidage (27) de la barre de traction (26) traverse la partie de guidage (43) des éléments de guidage (41) pour être disposée dans la partie de guidage (44).

3. Store à enrouleur pour fenêtre selon une des revendications précédentes, **caractérisé en ce que** les éléments de guidage (41) prévus sur les bords latéraux (38) s'engagent au moins sur la barre de traction (28) ou les pièces de guidage (27).

4. Store à enrouleur pour fenêtre selon une des revendications précédentes, **caractérisé en ce que**, entre une extrémité (32) de la glissière (24) associée à l'axe d'enroulement (31) et l'axe d'enroulement (31), il est prévu au moins une unité d'orientation ou de déviation (54) qui fait passer au moins partiellement l'élément de guidage (41) d'une position de guidage à une position d'enroulement.

5. Store à enrouleur pour fenêtre selon la revendication 4, **caractérisé en ce que** ladite au moins une unité d'orientation ou de déviation (54) comporte, pour un élément de guidage en forme de ruban (41), une fente de guidage (56) dont l'orientation est prévue entre une position d'enroulement et une position de guidage de l'élément de guidage (41) et qui présente de préférence une position intermédiaire moyenne.

6. Store à enrouleur pour fenêtre selon une des revendications précédentes, **caractérisé en ce que** la partie de guidage (43) prévue est parallèle ou à angle aigu par rapport à la bande de store (21).

7. Store à enrouleur pour fenêtre selon la revendication 6, **caractérisé en ce qu'**une pièce de guidage (27) est conçue coudée et guidée de manière adjacente à la partie de guidage (43) dans la partie de guidage (44).

8. Store à enrouleur pour fenêtre selon une des revendications précédentes, **caractérisé en ce que** la bande de store (21) est réalisée sous forme de tissu à mailles en matériau textile, dans un matériau mixte ou composite à base de textile et matière plastique, dans une matière plastique réticulée, dans une bande de matière plastique avec des parties élastiques ou dans une feuille élastique.

9. Store à enrouleur pour fenêtre selon une des revendications précédentes, **caractérisé en ce que** la bande de store (21) présente une formation des mailles dont l'extensibilité transversalement à la direction d'enroulement et de déroulement de la bande de store (21) est plus grande que dans la direction d'enroulement et de déroulement de la bande de store (21).

10. Store à enrouleur pour fenêtre selon une des revendications précédentes, **caractérisé en ce que**, à l'état étiré et à l'état non étiré, la bande de store (21) produit un ombrage d'au moins 20 %.

11. Store à enrouleur pour fenêtre selon une des revendications précédentes, **caractérisé en ce que**, dans la région où la glissière (24) présente sa distance la plus faible, les bords latéraux (38) de la bande de store (21) présentent une extension d'au moins 3 % par rapport à un état non sollicité.

12. Store à enrouleur pour fenêtre selon une des revendications précédentes, **caractérisé en ce que** la bande de store (21) est extensible d'au moins 5 % transversalement à la direction d'enroulement et de déroulement par rapport à l'état non sollicité.

13. Store à enrouleur pour fenêtre selon une des revendications précédentes, **caractérisé en ce que** les éléments de guidage (41) sur les bords latéraux (38) sont réalisés dans un matériau résistant à la traction et souple, en particulier sous la forme d'un cordon.

14. Store à enrouleur pour fenêtre selon la revendication 13, **caractérisé en ce que** les éléments de guidage (41) sont réalisés sous la forme d'un ruban en matière plastique, d'un ruban en textile avec et sans noyau souple, d'un ruban en matière plastique renforcé par fibres, en particulier d'un ruban en PTFE, ou d'un ruban métallique.

15. Store à enrouleur pour fenêtre selon une des revendications précédentes, **caractérisé en ce que** le bord latéral (38) est fixé audit au moins un élément de guidage (41) par serrage, collage, encollage, couture, soudage, au moins par chaleur ou ultrasons, par tricotage ou pressage.

16. Store à enrouleur pour fenêtre selon une des revendications précédentes, **caractérisé en ce qu'**un axe d'enroulement (31) déplaçable est prévu.

17. Store à enrouleur pour fenêtre selon une des revendications précédentes, **caractérisé en ce que** la bande de store (21) extensible peut être utilisée pour des vitres arrière, des hayons, des fenêtres latérales, des fenêtres de toit ou des pare-brise.
